# EUROPÄISCHE PATENTSCHRIFT

(11) **EP 1 066 911 B1**
(45) Veröffentlichungstag und Bekanntmachung des Hinweises auf die Patenterteilung: **25.08.2004**
(21) Anmeldenummer: 00113760.3
(22) Anmeldetag: 29.06.2000
(51) Int. Cl.: B23K 9/23, B23K 3/03

(54) **Schweiss-Löt-Zusatzwerkstoff**
Welding-brazing material
Matériau d'apport pour soudage-brasage

(30) Priorität: 02.07.1999 DE 19930741
(43) Veröffentlichungstag der Anmeldung: 10.01.2001
(73) Patentinhaber: Berkenhoff GmbH, 35452 Heuchelheim (DE)
(72) Erfinder: Rechtziegel, Bruno, 35452 Heuchelheim (DE); Fackert, Jürgen, 35239 Steffenberg (DE); Schmid, Eberhard, 63755 Alzenau (DE); Berger, Uwe, 35638 Leun (DE); Schlottner, Jürgen, 61200 Wölfersheim (DE); Tauber, Klaus, 35444 Biebertal (DE)
(74) Vertreter: Böck, Bernhard, Dipl.-Ing.

(56) Entgegenhaltungen:
- DE-A- 19 953 670
- GB-A- 2 037 320
- US-A- 3 857 165

## Beschreibung

Die Erfindung betrifft einen Zusatzwerkstoff mit Kupfer, Aluminium und Mangan zum Löten und/oder Schweißen.

Derartige Zusatzwerkstoffe sind aus dem Stand der Technik bekannt und auch in der DIN 1733, Teil 1 genormt. Zusatzwerkstoffe müssen so ausgewählt werden, dass die Festigkeitswerte der Löt-Schweißverbindung mindestens die Gewährleistungs- oder Normwerte des Grundwerkstoffes erreichen. Ausreichende Verformungsfähigkeit des Schweißguts ist besonders dann von Bedeutung, wenn der Grundwerkstoff geringe Schweißeignung hat. Besondere Probleme wirft dabei das MIG-Löten von verzinkten oder aluminierten Dünnblechen oder aber das MIG-Löten rostfreier Stahlbleche auf. Ebenfalls problematisch ist oftmals das Auftragsschweißen.

Beim Verschweißen dünner Bleche kam es bisher durch eine zu hohe Wärmedurchdringung des Bleches zum Verzug desselben. Als weiteres Problem stellt sich oftmals das mangelhafte Fließ- und Benetzungsverhalten von Werkstoff und Schweißzusatzwerkstoff dar. Zwischen den beiden Schweißstücken bildet sich dadurch kein gleichförmiges Bad, welches eine dauerhafte Verbindung gewährleistet.

Aus der JP-A-58-205694 ist ein Zusatzwerkstoff auf Kupferbasis enthaltend Aluminium und Mangan bekannt. Der bekannte Zusatzwerkstoff zeichnet sich durch eine hohe mechanische Festigkeit, hohe Korrosionsbeständigkeit und hohe Bindungskräfte aus.

Aus der DE-A-581 748 ist ein Kupferlot bekannt, das als zusätzliche Bestandteile Aluminium und Mangan aufweist.

Die Aufgabe der Erfindung ist es daher, einen Zusatzwerkstoff vorzuschlagen, welcher sich zum Schweißen, aber insbesondere auch mit einem Impulslichtbogen durch das MIG-Löten zum Verbinden von beschichteten Blechen und rostfreien Stählen, z.B. 1.4301 u.ä. eignet und neben niedriger Energieeinbringung und damit geringerem Bauteilverzug ein gutes Fließ- und Benetzungsverhalten, eine gute Spaltüberbrückung. und eine stabile Naht gewährleistet. Des Weiteren soll der Schweiß-Löt-Zusatzwerkstoff eine gute Korrosionsbeständigkeit haben und hohe Fügegeschwindigkeiten zulassen.

Diese Aufgabe wird erfindungsgemäß dadurch gelöst, dass der Zusatzwerkstoff in Gew-%.
0,5 bis 7,0 % Al,
0,5 bis 8,0 % Mn,
0,01 bis 6,0 % Ni
übliche Verunreinigungen kleiner oder gleich 0,9 %
und als Rest Cu enthält

Im Gegensatz zu den aus dem Stand der Technik bekannten Zusatzwerkstoffen hat dieser Zusatzwerkstoff einen angepassten Schmelzpunkt, was zu einem geringen Wärmeeintrag und somit auch zu einem geringen Verzug der Schweißstucke führt. Dadurch ist der Zusatzwerkstoff insbesondere für dünne Bleche sowie auch für rostfreie Stähle wie 1.4301 DIN 17440 von weniger 4,0 und sogar weniger als 1,5 mm Dicke geeignet. Der Zusatzwerkstoff enthält 0,01 bis 6,0 % Nickel. Durch das gute Fließ- und Benetzungsverhalten erhält man eine gleichförmige flache Naht, welche weitgehend porenfrei ist. Der Zusatzwerkstoff selbst ist gut ziehbar und kann daher als Draht mit geringem Durchmesser von beispielsweise 0,8 mm bereitgestellt werden.

Übliche Verunreinigungen sollen jeweils in von nicht mehr als 0,01 bis 0,3 % Silizium, 0,01 bis 1,0 % Zink, 0,01 bis 0,5 % Zinn, 0,01 bis 0,1 % Chrom und 0,01 bis 0,1% Kobalt vorkommen.

Ein erster vorteilhafter Zusatzwerkstoff enthält 5 Gew-% Aluminium und 2 Gew-% Mangan.

Ein weiterer vorteilhafter Zusatzwerkstoff enthält erfindungsgemäß dagegen 2 Gew-% Aluminium und 6 Gew.% Mangan.

Ein dritter vorteilhafter Zusatzwerkstoff weist 6 Gew-% Aluminium, 1 Gew-% Mangan und 1 Gew.% Nickel auf.

Ein vierter vorteilhafter Zusatzwerkstoff weist 5 % Al, 1% Mn und 1 % Ni auf.

## Patentansprüche

1. Zusatzwerkstoff mit Cu, Al und Mn zum Löten und/oder Schweißen,
**dadurch gekennzeichnet, dass**
der Zusatzwerkstoff in Gew-%
0,5 bis 7,0 % Al,
0,5 bis 8,0 % Mn,
0,01 bis 6,0 %Ni,
übliche Verunreinigungen kleiner oder gleich 0,9 %
und als Rest Cu enthält.

2. Zusatzwerkstoff nach Anspruch 1 oder 2, **dadurch gekennzeichnet, dass** die Verunreinigungen in Gew-% jeweils für
Si 0,01 bis 0,3%,
Zn 0,01 bis 1,0 %,
Sn 0,01 bis 0,5 %,
Cr 0,01 bis 0,1 %,
Co 0,01 bis 0,1 %
nicht Ubersteigen.

3. Zusatzwerkstoff nach einem der Ansprüche 1 oder 2, **dadurch gekennzeichnet, dass** der Zusatzwerkstoff 5 Gew-% Al und 2 Gew-% Mn enthält.

4. Zusatzwerkstoff nach einem der Ansprüche 1 bis 3, **dadurch gekennzeichnet, dass** der Zusatzwerkstoff 2 Gew-% Al und 6 Gew-% Mn enthält.

5. Zusatzwerkstoff nach einem der Ansprüche 1 bis 3, **dadurch gekennzeichnet, dass** der Zusatzwerkstoff 6 Gew-% Al, 1 Gew-% Mn und 1 Gew-% Ni enthält.

6. Zusatzwerkstoff nach einem der Ansprüche 1 bis 3, **dadurch gekennzeichnet, dass** der Zusatzwerkstoff 5 Gew-% Al, 1 Gew-% Mn und 1 Gew-% Ni enthält.

## Claims

1. A filler material containing Cu, Al and Mn for soldering and/or welding, **characterised in that** the filler material contains, in wt.%,
0.5 to 7.0% Al,
0.5 to 8.0% Mn,
0.01 to 6.0% Ni,
the usual impurities less than or equal to 0.9%,
the remainder being Cu.

2. A filler material according to Claim 1 or 2, **characterised in that** the impurities do not exceed the following respective values in wt%:
Si 0.01 to 0.3%,
Zn 0.01 to 1.0%,
Sn 0.01 to 0.5%,
Cr 0.01 to 0.1%,
Co 0.01 to 0.1%.

3. A filler material according to any one of Claims 1 or 2, **characterised in that** the filler material contains 5 wt.% Al and 2 wt.% Mn.

4. A filler material according to any one of Claims 1 to 3, **characterised in that** the filler material contains 2 wt.% Al and 6 wt.% Mn.

5. A filler material according to any one of Claims 1 to 3, **characterised in that** the filler material contains 6 wt.% Al, 1 wt.% Mn and 1 wt.% Ni.

6. A filler material according to any one of Claims 1 to 3, **characterised in that** the filler material contains 5 wt.% Al, 1 wt.% Mn and 1 wt.% Ni.

## Revendications

1. Métal d'apport pour le brasage et/ou le soudage contenant du Cu, de l'Al et du Mn,
**caractérisé en ce**
**qu'**il contient, en % rapporté au poids,
0,5 à 7,0 % d'Al,
0,5 à 8,0 % de Mn,
0,01 à 6,0 % de Ni,
et des impuretés habituelles dans une proportion inférieure ou égale à 0,9 % en poids,
la proportion restante étant du cuivre.

2. Métal d'apport selon la revendication 1 ou 2, **caractérisé en ce que** les taux respectifs d'impuretés, exprimés en % rapporté au poids, ne sont pas supérieurs aux suivants :
Si : 0,01 à 0,3 %,
Zn 0,01 à 1,0 %,
Sn : 0,01 à 0,5 %,
Cr: 0,01 à 0,1 %,
Co : 0,01 à 0,1 %.

3. Métal d'apport selon une des revendications 1 ou 2, **caractérisé en ce qu'**il contient 5 % en poids d'Al et 2 % en poids de Mn.

4. Métal d'apport selon une des revendications 1 à 3, **caractérisé en ce qu'**il contient 2 % en poids d'Al et 6 % en poids de Mn.

5. Métal d'apport selon une des revendications 1 à 3, **caractérisé en ce qu'**il contient 6 % en poids d'Al, 1 % en poids de Mn et 1 % en poids de Ni.

6. Métal d'apport selon une des revendications 1 à 3, **caractérisé en ce qu'**il contient 5 % en poids d'Al, 1 % en poids de Mn et 1 % en poids de Ni.
